# EUROPÄISCHE PATENTSCHRIFT

(11) **EP 4 078 225 B1**
(45) Veröffentlichungstag und Bekanntmachung des Hinweises auf die Patenterteilung: **11.11.2026**
(21) Anmeldenummer: 21805936.8
(22) Anmeldetag: 03.11.2021
(51) Int. Cl.: G01S 11/02, G01S 5/02

(54) **VERFAHREN ZUR BESTIMMUNG EINER KALIBRIERUNG ZUR LAUFZEITMESSUNG**
METHOD FOR DETERMINING CALIBRATION FOR MEASURING TRANSIT TIME
PROCÉDÉ POUR DÉTERMINER UN ÉTALONNAGE POUR MESURER UN TEMPS DE PROPAGATION

(30) Priorität: 04.11.2020 WO PCT/EP2020/081016; 04.11.2020 WO PCT/EP2020/081015
(43) Veröffentlichungstag der Anmeldung: 26.10.2022
(73) Patentinhaber: Lambda: 4 Entwicklungen GmbH, 22299 Hamburg (DE)
(72) Erfinder: REIMANN, Rönne, 22769 Hamburg (DE)
(74) Vertreter: Raffay & Fleck
(86) Internationale Anmeldenummer: PCT/EP2021/080521
(87) Internationale Veröffentlichungsnummer: WO 2022/096512

(56) Entgegenhaltungen:
- WO-A1-2022/016161
- US-A1- 2014 179 340
- US-A1- 2020 099 561
- US-B1- 6 489 923

## Beschreibung

Die Erfindung betrifft die Kalibrierung einer Vorrichtung oder eines Systems zur Signallaufzeitmessung bzw. signallaufzeitmessungbasierten Entfernungsmessung basierend auf mindestens einer Phasenmessung.

Es ist bekannt, eine Entfernung zwischen zwei Objekten mittels Funksignalen über Laufzeiten der Funksignals zu bestimmen. Auch ist es bekannt, die Entfernung an Hand von Phasenverschiebungen zu erkennen. US 2014/0179340 A1 offenbart eine Kalibrierung als einen paarweisen Bias-Kompensationsprozess für Entfernungsmessungen. Bias-Werte werden aus zweiseitigen Messungen (RTT und/oder RSSI) berechnet. Diese Bias-Werte werden auf nachfolgende Messungen angewandt, um die Distanz- und Positionsbestimmung zu verbessern.

Es ist wünschenswert eine einfache und zuverlässige Vorgehensweise zur Kalibrierung bereit zu stellen.

Der Erfinder hat überraschend festgestellt, dass Vorrichtungen, insbesondere aktuell gängige Bluetoothvorrichtungen und Bluetoothchips, zur phasenbasierten Entfernungsmessung eine sehr viel geringere Schwankung innerhalb einer Serie aufweisen als solche zur signallaufzeitbasierten Entfernungsmessung. Dies gilt insbesondere in Bezug auf die phasenbasierten Entfernungsmessung und die signallaufzeitbasierten Entfernungsmessung oder die Signallaufzeitmessung einer einzigen Vorrichtung bzw. eines einzigen Chips. Insbesondere weisen aktuell gängige Bluetoothvorrichtungen und Bluetoothchips bei der phasenbasierten Entfernungsmessung oder Phasenmessung eine sehr viel geringere Schwankung innerhalb einer Serie auf als bei der signallaufzeitbasierten Entfernungsmessung oder Signallaufzeitmessung. Daher ist es möglich, die signallaufzeitbasierte Entfernungsmessung, basierend auf einer phasenbasierenden Entfernungsmessung ohne großen Aufwand zu kalibrieren. So kann eine Vorrichtung oder ein Paar von Vorrichtungen einer Serie oder Baureihe exemplarisch in Bezug auf die phasenbasierte Entfernungsmessung kalibriert werden und diese Kalibrierung für die Phasenmessungen aller Vorrichtungen der Serie verwendet werden. Damit lassen sich dann alle Vorrichtungen der Serie in Bezug auf die Signallaufzeitmessung und darauf basierende Entfernungsmessungen auf einfache Weise und automatisch kalibrieren. Dies kann beispielsweise bei der ersten Entfernungsmessung der jeweiligen Vorrichtung oder zwischen einem Paar der Vorrichtungen erfolgen. Dies ist sogar bei einem Paar aus unterschiedlichen Baureihen oder Serien möglich, sofern jede eine serien- und/oder baureihenspezifische Kalibrierung bzgl. der phasenbasierten Entfernungsmessung aufweist.

Insbesondere liegen Genauigkeiten von signallaufzeitbasierten Entfernungsmessungen im 2,4 GHz Band bei einer Messung basierend auf einem Amplitudenanstieg oder einer Amplitudenmodulation mit üblichen Bauteilen typischerweise bei um einen Meter, wobei ohne Kalibrierung eine weitere Ungenauigkeit im Bereich von 1,5 Metern hinzu kommt. Noch deutlicher wird der Vorteil des vorliegenden Verfahrens bei der Verwendung einer Frequenzmodulation für die laufzeitbasierte Entfernungsmessung, denn hier ist mit einem durch die Kalibration beseitigbaren Anteil am Fehler von um 20m zu rechnen. Nach einer erfindungsgemäßen Kalibration ist mit einer Genauigkeit im Bereich eines Meters zu rechnen.

Gelöst wird die Aufgabe durch ein Verfahren zur Kalibrierung mindestens eines Systems zur Durchführung einer Signallaufzeitmessung und/oder Signallaufzeitdifferenzmessung, insbesondere Pulssignallaufzeitmessung und/oder Pulssignallaufzeitdifferentmessung (dToF), wobei das System auch eingerichtet ist, insbesondere in Zusammenwirkung einem ersten Objekt, eine Entfernungsmessung auf Basis einer Phasenmessung (phasenbasierte Entfernungsmessung, PBR) durchzuführen, wobei mindestens eine erste Entfernungsmessung zu dem ersten Objekt mittels Phasenmessung, insbesondere Phasenverschiebung und/oder Änderung einer Phasenverschiebung mit der Frequenz, und mindestens eine Signallaufzeitmessung oder eine zweite Entfernungsmessung basierend auf mindestens einer Signallaufzeitmessung zu dem oder über das erste Objekt durchgeführt werden, dadurch gekennzeichnet, dass das System zur Durchführung weiterer Signallaufzeitmessungen und/oder Entfernungsmessungen und/oder Ortung auf Basis mindestens einer Signallaufzeitmessung, insbesondere Pulssignallaufzeitmessung (ToF), und/oder Signallaufzeitdifferenzmessung, insbesondere Pulssignallaufzeitdifferentmessung (dToF), mittels der mindestens einen ersten Phasenmessung (PBR) kalibriert wird.

In einer Ausgestaltung, kann zur Kalibrierung mindestens eines Systems zur Durchführung einer Mehrzahl von Signallaufzeitdifferenzmessungen, jeweils zwischen einem gemeinsamen ersten und einem zweiten aus einer Mehrzahl zweiter Objekte, wobei das System auch eingerichtet ist, insbesondere in Zusammenwirkung des ersten Objekts mit mindestens einem der Mehrzahl der zweiten Objekte, mindestens eine erste Entfernungsmessung, insbesondere zwischen dem ersten Objekt und mindestens einem Referenzobjekt der Mehrzahl zweiter Objekte, auf Basis einer Phasenmessung durchzuführen, wobei die mindestens eine erste Entfernungsmessung zu dem ersten Objekt mittels Phasenmessung, insbesondere Phasenverschiebung und/oder Änderung einer Phasenverschiebung mit der Frequenz, und mindestens eine, Mehrzahl von Signallaufzeitdifferenzmessungen zwischen Signallaufzeiten, jeweils zwischen dem gemeinsamen ersten und einem zweiten aus der Mehrzahl zweiter Objekte, darunter auch das Referenzobjekt, durchgeführt werden, wobei, dass das System zur Durchführung weiterer Signallaufzeitdifferenzmessungen zwischen Signallaufzeiten und/oder Entfernungsmessungen und/oder Ortungen basierend auf weiteren Signallaufzeitdifferenzmessungen zwischen Signallaufzeiten, jeweils zwischen dem gemeinsamen ersten und einem zweiten aus der Mehrzahl zweiter Objekte mittels der mindestens einen ersten Phasenmessung kalibriert wird und wobei das System insbesondere eingerichtet ist, eine Mehrzahl von Signallaufzeitdifferenzmessungen, jeweils zwischen dem gemeinsamen ersten und einem zweiten aus einer Mehrzahl zweiter Objekte durchzuführen und darauf basierend mindestens eine Entfernung und/oder Lage des ersten Objekts zu bestimmten. Mit besonderem Vorteil ist das System ein "Time-difference of arrival" System, insbesondere ein Ultrawideband "Time-difference of arrival" System (UWB-TDoA). Die Signale an denen die Laufzeitmessungen und/oder die Phasenmessungen vorgenommen werden sind dann insbesondere UWB Signale, insbesondere mit einer Bandbreite von mindestens 500 MHz und/oder von mindestens 20 % des arithmetischen Mittelwertes von unterer und oberer Grenzfrequenz des genutzten Frequenzbandes.

Dabei beinhaltet das System bevorzugt ein zweites Objekt und insbesondere auch das erste Objekt. Insbesondere wird die Entfernungs- und/oder Laufzeitmessungen und/oder Laufzeitdifferenzmessungen zwischen dem ersten und dem mindestens einen zweiten Objekt durchgeführt.

Gelöst wird die Aufgabe auch durch eine Verwendung mindestens einer Phasenmessung an mindestens einem Signal zwischen einem ersten und mindestens einem zweiten Objekt, insbesondere mindestens einer phasenbasierten Entfernungsmessung (PBR), zur Kalibrierung mindestens einer Vorrichtung zur Signallaufzeitmessung, insbesondere Pulssuignallaufzeit (ToF), und/oder Signallaufzeitdifferenzmessungen, insbesondere Pulssignallaufzeitdifferenzmessung (dToF) und/oder signallaufzeitmessungbasierten und/oder signallaufzeitdifferenzmessungbasierten Entfernungsmessung und/oder Ortung des ersten und/oder mindestens einen zweiten Objekts.

Mit besonderem Vorteil ist die mindestens eine Vorrichtung Teil eines System zur signallaufzeitdifferenzmessungbasierten Entfernungsmessung und/oder Ortung des ersten Objekts und/oder umfasst das System eine Mehrzahl zweiter, insbesondere relativ zueinander stationärer, Objekte, wobei das System insbesondere eingerichtet ist, eine Mehrzahl von Signallaufzeitdifferenzmessungen, jeweils zwischen dem gemeinsamen ersten und einem zweiten aus einer Mehrzahl zweiter Objekte durchzuführen und darauf basierend mindestens eine Entfernung und/oder Lage des ersten Objekts zu bestimmten. Mit besonderem Vorteil ist das System ein "Time-difference of arrival" System, insbesondere ein Ultrawideband "Time-difference of arrival" System (UWB-TDoA). Die Signale an denen die Laufzeitmessungen und/oder die Phasenmessungen vorgenommen werden sind dann insbesondere UWB Signale, insbesondere mit einer Bandbreite von mindestens 500 MHz und/oder von mindestens 20 % des arithmetischen Mittelwertes von unterer und oberer Grenzfrequenz des genutzten Frequenzbandes.

Gelöst wird die Aufgabe auch durch eine Vorrichtung aufweisend eine Sende- und Empfangsanordnung sowie eine Einheit zur Phasenmessung, einen Oszillator, einen Zeitmesser, eingerichtet zur Durchführung einer Signallaufzeitmessung, aufweisend eine Steuerung zur Durchführung des Verfahrens nach einem der vorstehenden Ansprüche mittels der Vorrichtung.

Gelöst wird die Aufgabe auch durch ein System umfassend mindestens zwei Objekte, insbesondere mindestens ein erstes und eine Vielzahl zweiter Objekte, jeweils aufweisend eine Sende- und/oder Empfangsanordnung, eine PLL und/oder Oszillator und insbesondere einen Zeitmesser und eingerichtet gemeinsamen zur Durchführung einer Signallaufzeitmessung zwischen zwei der Objekten und einer phasenbasierten Entfernungsmessung zwischen zwei der Objekten, aufweisend mindestens eine Steuerung zur Durchführung des Verfahrens nach einem der vorstehenden Ansprüche mittels der mindestens zwei Objekte.

Besonders bevorzugt wird eine Vielzahl von zweiten Objekten, insbesondere örtlich relativ zu einander fest angeordnet verwendet. Dabei sind insbesondere die Mehrzahl zweiter Objekte eingerichtet, Laufzeitenunterschiede eines Signals des ersten Objekts zu der Mehrzahl zweiter Objekte und daraus insbesondere mindestens eine mögliche Lage des ersten Objekts zu den zweiten Objekten zu bestimmen. Insbesondere ist mindestens eines der zweiten Objekte ein Referenzobjekt und eingerichtet mindestens eine Phasenmessung und/oder Messung der Änderung der Phasenverschiebung auf Grund einer Frequenzänderung und/oder eine phasenbasierte Entfernungsmessung an mindestens einem Signal zwischen erstem Objekt und Referenzobjekt, insbesondere des ersten Objekts, durchzuführen und das System eingerichtet darauf basierend die Bestimmung der möglichen Lage zu kalibrieren und/oder deren Uneindeutigkeit zu beseitigen. Mit besonderem Vorteil ist das System ein "Time-difference of arrival" System, insbesondere ein Ultrawideband "Time-difference of arrival" System (UWB-TDoA). Die Signale an denen die Laufzeitmessungen und/oder die Phasenmessungen vorgenommen werden sind dann insbesondere UWB Signale, insbesondere mit einer Bandbreite von mindestens 500 MHz und/oder von mindestens 20 % des arithmetischen Mittelwertes von unterer und oberer Grenzfrequenz des genutzten Frequenzbandes.

Insbesondere ist das System durch das erste Objekt oder das erste und mindestens eine zweite Objekt gebildet. Insbesondere sind das erste und das zweite Objekt relativ zu einander frei bewegbar, insbesondere nicht mechanisch verbunden. Insbesondere handelt es sich bei dem ersten oder zweiten Objekt um einen Keyfob und/oder bei dem anderen der Objekte um ein Kraftfahrzeug und/oder einen stationäres Objekt, und/oder um ein in einem Objekt mit einer Zugangsverhinderungsvorrichtung fest verbundenes Objekt. Insbesondere wird die Kalibrierung und/oder das kalibrierte System zur Erkennung eines Relayangriffs und/oder zur Entscheidung über eine Freigabe, beispielsweise einer Tür und/oder einer Funktion, insbesondere Zündung eines Kraftfahrzeugs genutzt.

Die Signallaufzeitmessung kann dabei eine Signalrundlaufzeitmessung, beispielsweise vom zweiten über das erste zum zweiten, oder eine Messung der Signallaufzeit in eine Richtung sein.

Die phasenbasierte Entfernungsmessung ist insbesondere eine basierend auf der durch eine Frequenzänderung bedingte Phasenverschiebungsänderung, insbesondere an Signalen zwischen dem zweiten und ersten Objekt.

Der durch die Frequenzänderung, insbesondere zwischen einer ersten und einer zweiten Frequenz, bedingte Änderung der Phasenverschiebung ist dadurch bedingt, dass bei, insbesondere näherungsweise gleicher Entfernung bei beiden Messungen, unterschiedlich viele Wellenzüge auf die Entfernung passen und dadurch die Phasenverschiebung, die durch die Entfernung bedingt ist, zwischen den Frequenzen unterschiedlich ausfällt. Diese Änderung der Phasenverschiebung auf Grund der Frequenz ist der durch die Frequenzänderung bedingte Phasenwechsel. Beim Messen ergeben sich dabei Probleme, denn die Phasenmessung ist jeweils abhängig von einer Referenz und kann auch beim Umschalten zum Senden der unterschiedlichen Frequenzen ein, häufig undefinierter, Phasensprung entstehen. Somit wird zum Senden, und insbesondere auch zum Empfangen, bevorzugt phasenkohärent, also mit einem Phasensprung von null, umgeschaltet. Es reicht aber auch aus, den Phasensprung zu ermitteln oder zu kennen. Dann kann man die durch die Frequenzänderung Phasenänderung bestimmen durch die gemessene Phasenänderung korrigiert um den Phasensprung bei der Umschaltung des Senders und den Phasensprung beim Umschalten am Empfänger zur Messung der gemessenen Phasenänderung.

Die Entfernung kann dabei beispielsweise mittels 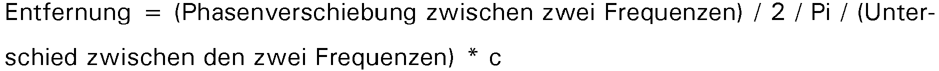 Entfernung = (Phasenverschiebung zwischen zwei Frequenzen)/2/Pi/(Unterschied zwischen den zwei Frequenzen) * c mit c gleich der Lichtgeschwindigkeit

Dabei ist die Änderung der Phasenverschiebung insbesondere bedingt durch die Änderung der Frequenz, bei näherungsweise gleichem Abstand. Die Phasenverschiebung ist dabei durch die Entfernung bedingt. Die durch die Frequenzänderung bedingte Änderung der Phasenverschiebung oder ist dadurch bedingt, dass bei, insbesondere näherungsweise gleicher Entfernung bei beiden Messungen, unterschiedlich viele Wellenzüge auf die Entfernung passen und dadurch die Phasenverschiebung, die durch die Entfernung bedingt ist, zwischen den Frequenzen unterschiedlich ausfällt. Diese Änderung der Phasenverschiebung auf Grund der Frequenz ist der durch die Frequenzänderung bedingte Phasenwechsel. Beim Messen ergeben sich dabei Probleme, denn die Phasenmessung ist jeweils abhängig von einer Referenz und kann auch beim Umschalten zum Senden der unterschiedlichen Frequenzen ein, häufig undefinierter, Phasensprung entstehen. Somit wird zum Senden, und insbesondere auch zum Empfangen, bevorzugt phasenkohärent, also mit einem Phasensprung von null, umgeschaltet. Es reicht aber auch aus, den Phasensprung zu ermitteln oder zu kennen. Dann kann man die durch die Frequenzänderung Phasenänderung bestimmen durch die gemessene Phasenänderung korrigiert um den Phasensprung bei der Umschaltung des Senders und den Phasensprung beim Umschalten am Empfänger zur Messung der gemessenen Phasenänderung.

Die Informationen über Umschaltzeitpunkt und/oder Phasensprung werden insbesondere bereitgestellt, beispielsweise durch Vorbestimmung oder Übertragung. Grundsätzlich ist es unerheblich, wo die Berechnungen durchgeführt werden, ob beispielsweise in den Objekten, einem Objekt oder einer zentralen Recheneinheit. Die Messungen und Informationen, die für die jeweilig durchzuführenden Berechnungen erforderlich sind, sind dahin bereit zu stellen.

Mit besonderem Vorteil wird also die Kenntnis über den Phasensprung beim Wechsel der Frequenz genutzt, um eine einfache Messung bzw. Berechnung zu ermöglichen, beispielswiese zur Korrektur der Messung der Änderung der Phasenverschiebung. Bei einem Phasensprung von null, wird auch diese Kenntnis insbesondere genutzt, indem die Messung der Änderung der Phasenverschiebung direkt verwendet wird, um eine Entfernung zu berechnen, sie wird sozusagen nur um null korrigiert.

Mit Vorteil wird eine zeitliche Synchronisation zwischen erstem und zweiten Objekt und/oder unter mehreren zweiten Objekten mit einer Genauigkeit von besser als 2 *µ*s, insbesondere im Bereich von 0,1 bis 2*µ*s herbeigeführt und/oder ist sie entsprechend gegeben. Die zeitliche Synchronisation liegt insbesondere im Bereich von 0,01 bis 10 ns, insbesondere im Bereich von 0,05 bis 5 ns und/oder wird die Drift der Zeitgeber im ersten und dritten Objekt bestimmt und bei der Laufzeitmessung berücksichtigt, insbesondere liegt die Genauigkeit der Driftbestimmung im Bereich von 0,1 bis 100ppb, insbesondere im Bereich von 1 bis 10 ppb. Dies lässt sich durch die phasenkohärente Umschaltung erreichen und deren Auswertung am Empfänger erreichen. Insbesondere sendet dazu das erste und/oder zweite Objekt mindestens ein Signal bei einer ersten Frequenz und bei einer zweiten Frequenz und wechselt zwischen diesen phasenkohärent, also mit einem Phasensprung von null, und/oder so, dass der Phasensprung beim Wechsel der Frequenzen beim Senden bekannt ist und/oder ermittelt wird. Insbesondere zwischen den mehreren zweiten Objekten kann die zeitliche Synchronisation auch kabelbasiert erfolgen.

Der Phasenunterschied oder Phasensprung entsteht beim Umschalten zwischen zwei Frequenzen in der Regel, aus technischen Gründen, kann aber auch vermieden werden. Dabei kann das Umschalten zwischen zwei Frequenzen mit kurzer Unterbrechung oder unterbrechungsfrei durchgeführt werden. Zum Zeitpunkt des unterbrechungsfreien Wechsels springt die Phase bzw. während des Wechselns mit Unterbrechung springt die Phase der gedacht in die Unterbrechung fortgedachten Signale vor und nach dem Umschalten. Zu dem Wechselzeitpunkt ohne Unterbrechung oder zu einem gedachten Wechselzeitpunkt in der Unterbrechung, insbesondere in der Mitte der Unterbrechung und/oder am Ende des Signals vor der Unterbrechung oder am Beginn des Signals nach der Unterbrechung, liegt ein definierter Phasensprung vor. Dieser ist der Phasenunterschied.

Insbesondere wird auch die Entfernungsmessung mittels durch eine Frequenzänderung bedingte Phasenverschiebungsänderung durchgeführt. Dabei sendet das zweite Objekt bei mindestens zwei unterschiedlichen Frequenzen, insbesondere einer ersten und einer zweiten Frequenz, zwischen denen es phasenkohärent, also mit einem Phasensprung von null, wechselt und/oder so wechselt, dass der Phasensprung beim Wechsel der Frequenzen beim Senden bekannt ist und/oder ermittelt wird.

Mit besonderem Vorteil wird also die Kenntnis über den Frequenzsprung beim Wechsel der Frequenz genutzt, um eine einfache Messung bzw. Berechnung zu ermöglichen, beispielswiese zur Korrektur der Messung der Änderung der Phasenverschiebung. Bei einem Phasensprung von null, wird auch diese Kenntnis insbesondere genutzt, indem die Messung der Änderung der Phasenverschiebung direkt verwendet wird, um eine Entfernung zu berechnen, sie wird sozusagen nur um null korrigiert.

Bevorzugt ist die Kalibrierung eine Kalibrierung der Signallaufzeitmessung, insbesondere Pulslaufzeitmessung, und/oder signallaufzeitmessungbasierten Entfernungsmessung, insbesondere pulslaufzeitbasiert (ToF), zwischen dem ersten und zweiten Objekt. Dies ist insbesondere sinnvoll, dadurch eine genauere Kalibration erreicht werden kann, die auf dieses Paar bezogen ist. Insbesondere wird das Verfahren für ein Objekt mit einer Vielzahl von anderen Objekten jeweils paarweise durchgeführt und für jedes Paar eine Kalibrierung vorgenommen, die für Messungen zwischen diesem Paar für weitere Signallaufzeitmessungen und/oder signallaufzeitmessungbasierten Entfernungsmessungen verwendet wird.

Mit Vorteil wird die Kalibrierung zur Durchführung mindestens einer, insbesondere einer Vielzahl von, Signallaufzeitmessung(en) und/oder signallaufzeitbasierten Entfernungsmessung(en) des Systems, insbesondere des ersten Objekts, insbesondere zwischen erstem und zweitem Objekt genutzt wird, insbesondere der Art, dass die Kalibrierung einen, insbesondere frequenz- und/oder temperaturabhängigen, Offset ermittelt, der bei der mindestens einen Signallaufzeitmessung und/oder signallaufzeitbasierten Entfernungsmessung als Korrektur verwendet wird. Eine frequenz- und/oder temperaturabhängiger Offset und/oder eine frequenz- und/oder temperaturabhängige Kalibrierung erhöht die Genauigkeit. Dabei kann der Offset beispielsweise aus einer Vielzahl von Offsets, jeweils für einen Frequenz- und/oder Temperaturbereich oder durch eine Funktion, abhängig von Temperatur und/oder Frequenz, bestehen.

Mit besonderem Vorteil ist und/oder wird die Phasenmessung und/oder phasenbasierte Entfernungsmessung nicht vorrichtungs-/systemspezifisch und/oder lediglich baureihen- und/oder Serienspezifisch kalibriert. Dies ist besonders effizient.

Bevorzugt werden mehrere Phasenmessungen und/oder phasenbasierte Entfernungsmessungen bei unterschiedlichen Frequenzen und/oder mehrere Messungen der Änderungen der Phasenverschiebungen mit der Frequenz bei unterschiedlichen Frequenzabständen zur Reduktion und/oder zum Ausschluss von Mehrdeutigkeiten, insbesondere im Rahmen der Ungenauigkeit der Signallaufzeitmessung und/oder signallaufzeitmessungbasierten Entfernungsmessung vor der Kalibrierung, durchgeführt und/oder für die Kalibrierung verwendet. Dadurch lässt sich auch eine Kalibrierung bei einem großen möglichen Offset bzw. einer großen Baureihen- und/oder Serienschwankung erreichen.

Die Kalibrierung wird mit Vorteil so durchgeführt, dass eine, insbesondere frequenz- und/oder temperaturabhängigen, Differenz zwischen phasenbasiert ermittelter Entfernung und signallaufzeitbasierter Entfernungsmessung als, insbesondere frequenz- und/oder temperaturabhängigen, Korrekturtherm ermittelt wird, mittels dessen mindestens eine weitere Signallaufzeitmessung und/oder weitere Entfernungsmessung auf Basis mindestens einer weiteren Signallaufzeitmessung des Systems, insbesondere des ersten Objekts, insbesondere zwischen erstem und zweitem Objekt, korrigiert wird. Dies stellt eine einfache Alternative dar und ist in der Regel ausreichend, um eine Genauigkeit der Kalibrierung zu erreichen, die im Verhältnis zur Schwankung der Laufzeitmessung, insbesondere auf Grund von Zeitmessungsungenauigkeiten, sinnvoll ist.

Mit besonderem Vorteil ist das Signal der Signallaufzeitmessung und/oder das Signal, an dem die Phasenmessung durchgeführt wird, ein Funksignal, insbesondere wird ein gemeinsames Funksignal für Signallaufzeitmessung und mindestens eine Phasenmessung genutzt. So kann beispielsweise ein Signal bei einer ersten Frequenz für eine Phasenmessung und Signallaufzeitmessung genutzt werden und ein zweites Signal mit einer zweiten Frequenz für eine weiter Phasenmessung für eine Messung der Änderung der Phasenverschiebung genutzt werden. Dabei kann das zweite Signal aber auch für eine weitere Signallaufzeitmessung genutzt werden. Die Signallaufzeitmessungen können dann beispielsweise gemittelt und mit der phasenverschiebungsänderungsbasierten Messung zur Bestimmung der Kalibrierung bzw. des Offsets oder des Korrekturterms verwendet werden. Dies kann bei einer Vielzahl von ersten und zweiten Frequenzen wiederholt werden, um die Genauigkeit zu verbessern. Es ist aber auch möglich unterschiedliche Signale und/oder Frequenzen für phasenbasierte und laufzeitbasierte Messungen zu nutzen. Dabei sind die Frequenzen, insbesondere von Messungen, die mit einander verglichen werden, insbesondere zueinander ähnlich.

Mit besonderem Vorteil ist die Signallaufzeit die Signallaufzeit für einen Weg zwischen zweitem und erstem Objekt oder die Signalrundlaufzeit zwischen zweitem und erstem Objekt und zurück.

Bevorzugt ist Zeitabstand zwischen dem Übertragen eines Signals für die Signallaufzeitmessung und einem Signal für die Phasenmessung, insbesondere solcher, die mit einander verglichen werden, geringer ist als 500 ms. Dies erhöht die Genauigkeit insbesondere bei veränderlichen Abständen und/oder Umgebungen.

Mit besonderem Vorteil wird die erfindungsgemäße Kalibrierung für eine Vielzahl von Vorrichtungen und/oder Paaren von baugleichen Vorrichtungen und/oder Vorrichtungen aus einer Baureihe oder Serie jeweils einzeln durchgeführt wird, wobei für die Phasenmessung und/oder phasenbasierte Entfernungsmessung für alle Vorrichtungen und/oder Paare der Vielzahl nur eine einheitliche für alle gleiche Kalibrierung verwendet wird. Dies erhöht die Genauigkeit bei geringem Aufwand, da die Kalibrierungen schnell und automatisch durchgeführt werden können, insbesondere zumindest wenn die Objekte das erste Mal Signale untereinander austauschen.

Gelöst wird die Aufgabe auch durch eine Vorrichtung aufweisend eine Sende- und Empfangsanordnung sowie eine Einheit zur Phasenmessung, einen Oszillator, einen Zeitmesser, eingerichtet zur Durchführung einer Signallaufzeitmessung, aufweisend eine Steuerung zur Durchführung des Verfahrens nach einem der vorstehenden Ansprüche mittels der Vorrichtung.

Gelöst wird die Aufgabe auch durch ein System umfassend zwei Objekte, jeweils aufweisend eine Sende- und Empfangsanordnung sowie eine Einheit zur Phasenmessung, eine PLL und/oder Oszillator, einen Zeitmesser und eingerichtet gemeinsamen zur Durchführung einer Signallaufzeitmessung zwischen den zwei Objekten und einer phasenbasierten Entfernungsmessung zwischen den zwei Objekten, aufweisend mindestens eine Steuerung zur Durchführung des Verfahrens nach einem der vorstehenden Ansprüche mittels der zwei Objekte.

Mit besonderem Vorteil wird das Verfahren so durchgeführt, dass die Phasenmessungen und/oder Signallaufzeitmessungen mit Signalen in nur eine Richtung, insbesondere vom zweiten zum ersten Objekt durchgeführt werden. Insbesondere wird das Verfahren aber mit umgekehrten Rollen auch in die entgegengesetzte Richtung durchgeführt.

Mit besonderem Vorteil wechseln das erstes und/oder zweite Objekt zwischen erster und zweiter Frequenzen phasenkohärent und/oder so, dass der Phasensprung beim Wechsel der Frequenzen beim Senden und/oder zum Empfang bekannt ist und/oder ermittelt wird und insbesondere die beim Empfang gemessenen Phasen um diesen Phasensprung oder diese Phasensprünge korrigiert werden. Dies erleichtert die Berechnung und ermöglicht eine besonders schnelle Durchführung.

Mit besonderem Vorteil wird das Verfahren mit einer Mehrzahl von Paaren erster und zweiter Frequenz wiederholt durchgeführt. Dadurch kann die Genauigkeit erhöht werden, beispielsweise durch Mittelung und/oder Reduzierung der Mehrdeutigkeit.

Insbesondere senden erstes und/oder zweites Objekte ein Frequenzhopping, indem sie insbesondere näherungsweise gleiche Frequenzen senden, wobei die Reihenfolge dieser Frequenzen im Frequenzhopping des ersten und zweiten Objekts nicht entscheidend ist.

Näherungsweise gleich oder ähnlich sind Frequenzen im Sinn dieser Ausführungen insbesondere bei einem Unterschied von weniger als 5%, insbesondere weniger als 1 %, der niedrigeren Frequenz und/oder weniger als 17 MHz, insbesondere weniger als 10 MHz, insbesondere weniger als 9 MHz, insbesondere weniger als 2 MHz. So kann beispielsweise Objekt A die Frequenzen FA1, FA2 bis FAn und Objekt B die Frequenzen FB1, FB2 bis FBn verwenden, wobei gilt 95% FAx < =FBx < = 105% FAx mit x von 1 bis n verwenden.

Unter einem Frequenzhopping ist insbesondere das aufeinanderfolgende Senden auf unterschiedlichen Frequenzen zu verstehen, von denen insbesondere immer Paare eine erste und ein zweite Frequenz darstellen.

Insbesondere liegen die Frequenzen, insbesondere der/des Frequenzhopping(s), in einer Spanne von 25 bis 100 MHz, insbesondere überspannen Sie eine solche Spanne vollständig. Insbesondere liegen die Frequenzen, insbesondere des Frequenzhoppings, im Bereich von 2 bis 6 GHz. Insbesondere liegt zwischen benachbarten aber nicht notwendig aufeinanderfolgenden Frequenzen, insbesondere des Frequenzhoppings, bzw. zwischen erster und zweiter Frequenz ein Abstand im Bereich von 0,1 bis 17 MHz, insbesondere im Bereich von 0,5 bis 10 MHz.

Unter phasenkohärentem Umschalten oder Wechsel zwischen zwei Frequenzen wird insbesondere verstanden, dass die Phase nach der Umschaltung relativ zur Phasenlage vor der Umschaltung bekannt ist. Dies ist der Fall, wenn die Veränderung der Phase beim Umschalten null ist oder einen vorbekannten oder ermittelbaren Wert beträgt. Dadurch lassen sich weitere Messungen der Phase am Sender vermeiden und die Berechnung vereinfachen, insbesondere wenn ohne Phasenveränderung zwischen Frequenzen gewechselt wird. Mit Vorteil schaltet nicht nur das sendende Objekt phasenkohärent sondern auch das empfangene, insbesondere wird in jedem Objekt eine PLL phasenkohärent geschaltet.

Hilfsweise kann bevorzugt aber auch nicht phasenkohärent geschaltet und die Änderung der Phase lokal, insbesondere also beim Sender vor der Übertragung und/oder beim Empfänger bezüglich der PLL des Empfängers, bestimmt werden und diese Änderung in der Berechnung korrigiert werden.

Beispielsweise kann bei Kenntnis des Zeitpunktes des phasenkohärenten Wechsel oder des Wechsels mit gemessenem Phasensprung am sendenden Objekt und bei Bestimmung des Wechsels im empfangenen Signal am empfangenen Objekt die Zeit zwischen Senden und Empfang des Wechsels bestimmt werden, die die Signallaufzeit (ToF) darstellt, und auch die Phasenverschiebung bestimmt werden, die sich allein aus dem Signallauf ergibt. Aus der Signallaufzeit lässt sich mittels der Lichtgeschwindigkeit direkt die Entfernung bestimmten. Über die Phasenverschiebung ist dies, jedoch mit einer Mehrdeutigkeit, ebenfalls möglich, was in der Regel genauer ist. Durch Nutzung mehrerer Frequenzen lässt sich die Mehrdeutigkeit bei der phasenbasierten Messung reduzieren. Durch die Kombination der signallaufzeit- und phasenbasierten Messungen lässt sich eine besonders genaue und robuste Entfernungsmessung realisieren.

Unter phasenkohärentem Umschalten zwischen zwei Frequenzen wird insbesondere verstanden, dass der Zeitpunkt des Umschaltens genau bestimmt ist oder gemessen wird und die Phase nach der Umschaltung relativ zur Phasenlage vor der Umschaltung bekannt ist. Dies ist der Fall, wenn die Veränderung der Phase beim Umschalten null ist oder einen vorbekannten Wert beträgt oder am Sender gemessen wird.

Es wurde zudem überraschend festgestellt, dass die aus der hier beschriebenen einseitigen oder erfindungsgemäßen Entfernungsmessung gewonnene Entfernungen bei der Verwendung handelsüblicher Transceiver wie z.B. der schon etwas ältere cc2500 oder der aktuelle cc26xx von Texas Instruments oder der Kw35/36/37/38 von NXP oder der DA1469x von Dialog abhängig sind von der zur Entfernungsbestimmung verwendeten Frequenz. Dabei scheinen Ungenauigkeiten in den Transceivern auch zu errechneten Entfernungen unterhalb der tatsächlichen Entfernung zu führen, dies aber nur bei solchen Frequenzen, deren Übertragungskanal stark gedämpft ist, sodass diese problemlos bei der Berechnung eliminiert werden können.

Somit ist es vorteilhaft bei der Abstandsbestimmung Signalanteile des Objekts, dessen Signale zur Abstandsbestimmung genutzt werden, teilweise nicht zur Abstandsbestimmung zu nutzen und zwar, solche Anteile nicht zu nutzen, die oberhalb einer Leistungsobergrenze liegen und/oder solche Anteile nicht zu nutzen, die unterhalb einer Leistungsuntergrenze liegen. Diese Grenzen können vorbestimmt sein oder aus den empfangenen Signalen bestimmt werden und insbesondere oberhalb bzw. unterhalb der mittleren Empfangenen Leistung liegen und zwar insbesondere mindestens 20% oberhalb der mittleren Empfangsleistung (Leistungsobergrenze) und/oder mindestens 20% unterhalbe der mittleren Empfangsleistung (Leistungsuntergrenze) liegen.

Bevorzugt werden Signalanteile bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie empfangen wurden, nicht berücksichtigt.

Mit Vorteil liegt die Leistungsuntergrenze im Bereich von 5 bis 50% der mittleren Leistung der empfangenen Signale und/oder die Leistungsobergrenze im Bereich von 120 bis 200% der mittleren Leistung der empfangenen Signale.

In einer anderen Ausgestaltung werden aus den, insbesondere in der Entscheidung ausgewählten, Signalen die x% der Signale mit kleinster empfangener Amplitude aussortiert und nicht verwendet und/oder die y% der Signale mit größter empfangener Amplitude aussortiert und nicht verwendet. Als besonders vorteilhaft hat es sich erwiesen, wenn die Summe aus x und y 10 nicht unterschreitet und/oder 75 nicht überschreitet und/oder x im Bereich von 10 bis 75 und/oder y im Bereich von 20 bis 50 liegt. Mit diesen Werten lässt sich in den meisten Situationen eine hohe Genauigkeit und eine zuverlässige Abstandsbestimmung erreichen.

Bevorzugt sendet das erste und/oder zweite oder jedes der zwei Objekte die Signale auf mehreren Frequenzen nacheinander und/oder aufeinanderfolgend, insbesondere unmittelbar aufeinanderfolgend. Insbesondere werden beim Senden durch erstes und zweites Objekt zunächst alle Signale des ersten oder zweiten Objekts und anschließend die des anderen gesendet. Arbeitet man mit mehreren Objekten, senden sie insbesondere alle nacheinander, insbesondere jeweils ein Frequenzhopping. Dadurch lassen sich unter anderem Einflüsse von Umgebungs- oder Entfernungsänderungen und von Bewegungen eines oder beider Objekte reduzieren.

Mit Vorteil übersteigt die Bandbreite der Signale zu keiner Zeit 50 MHz, insbesondere 25 MHz. Dadurch lässt sich Energie einsparen, lassen sich Störungen anderer Prozesse vermeiden und gegenüber breitbandigen Verfahren einfache Bauteile nutzen.

Bevorzugt wird vor, nach und/oder während der Durchführung des Verfahrens mindestens eine Zeit- und/oder Taktsynchronisation und/oder -korrektur zwischen den zwei Objekten durchgeführt. Dies erhöht die Genauigkeit des Verfahrens. Bevorzugt wird auch eine Drift der Uhr des ersten und/oder zweiten Objekts oder einen Unterschied in der Drift der Uhren des ersten und des zweiten Objekts bestimmt und bei der Abstandsbestimmung bzw. Laufzeitmessung berücksichtigt. Dies erhöht die Genauigkeit des Verfahrens.

Auch die Drift der Oszillatoren kann für die Phasenmessung wie im Stand der Technik bekannt korrigiert werden und verbessert die Genauigkeit weiter.

Mit Vorteil wird das Verfahren so geführt, dass der Frequenzabstand zwischen zwei aufeinander folgenden der mehreren Frequenzen mindestens 0,1 MHz und/oder maximal 17 MHz, insbesondere maximal 10 MHz beträgt und/oder die mehreren Frequenzen mindestens fünf Frequenzen und/oder maximal 200 Frequenzen darstellen und/oder wobei die mehren Frequenzen ein Frequenzband von mindestens zwei MHz und/oder maximal 100 MHz überspannen. Dadurch lässt sich ein ausgewogenes Maß zwischen Bandbreitenerfordnernis, welches Anforderungen an verfügbare Frequenzen und Hardware stellt, und Genauigkeit finden.

Mit Vorteil sind die Objekte Teile eines Datenübertragungssystems, insbesondere eines Bluetooth, WLAN oder Mobilfunk Datenübertragungssystems. Bevorzugt sind die Signale Signale des Datenübertragungssystems, insbesondere eines Datenübertragungsstandards, beispielsweise Mobilfunkstandard, WLAN oder Bluetooth, die zur Datenübertragung gemäß des Datenübertragungsstandards genutzt werden.

Vorteilhafterweise werden die Signale über mehrere Antennenpfade, insbesondere mindestens drei, übertragen, insbesondere mit mehreren Antennen, insbesondere nacheinander, am sendenden Objekt gesendet und/oder mit mehreren Antennen am empfangenen Objekt empfangen.

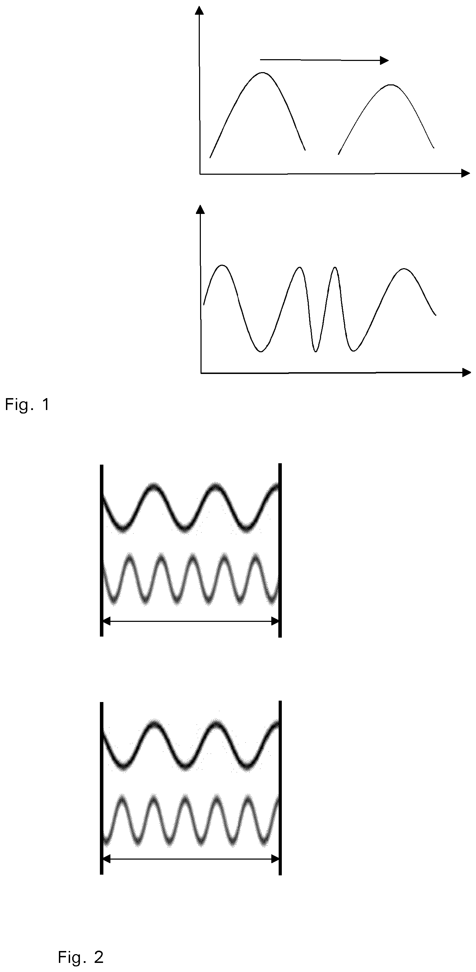

Fig. 1 zeigt oben rein schematisch und nicht beschränkend eine Darstellung der Amplitude gegenüber der absoluten Zeit. Links zu erkennen ist ein Signal am Sender, dem zweiten Objekt, in Form der Amplitudenmodulation, hier ganz vereinfacht zwischen null und einem Wert. Weiter rechts, also zeitlich später, ist das empfangene Signal am Empfänger, dem ersten Objekt, gezeigt. Die Signallaufzeit ist dabei durch einen Pfeil veranschaulicht.
Fig. 1 zeigt unten rein schematisch und nicht beschränkend eine Darstellung der Amplitude gegenüber der absoluten Zeit. Gezeigt ist ein Signal mit Frequenzmodulation, dass ebenfalls zur Signallaufzeitmessung genutzt werden kann.
Fig. 2 zeigt rein exemplarisch und schematisch eine Veranschaulichung der Veränderung der Phasenverschiebung durch eine Frequenzänderung. Zwischen zwei Objekten, durch jeweils einen senkrechten Strich gekennzeichnet mit einem durch einen Doppelpfeil gekennzeichneten Abstand, ist in der oberen Darstellung ein Welle bei einer niedrigeren Frequenz (oben) und ein Welle bei einer niedrigeren Frequenz (darunter) gezeigt. Zu erkennen ist, dass die Phasenveränderung vom Sender zum Empfänger bei den Frequenzen unterschiedlich ausfällt. Im unteren Bild ist die untere Welle phasenverschoben dargestellt, um die Änderung der empfangenen Phase auch auf Grund der Sendephase zu verdeutlichen.

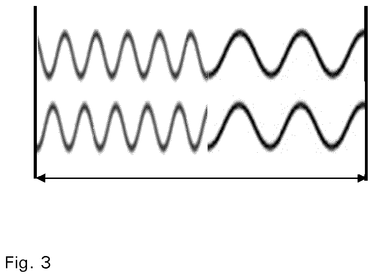

Fig. 3 verdeutlicht rein schematisch den Einfluss des Phasensprungs bei der Umschaltung. In Figur 3 sind wieder rechts und links jeweils ein Objekt als senkrechte Striche und dazwischen ihr Abstand durch einen Doppelpfeil veranschaulicht. In der Fig. 3 oben ist eine phasenkohärente Frequenzumschaltung veranschaulicht, in der Fig. 3 unten eine Umschaltung mit Phasensprung. Es ist zu erkennen, dass der Phasensprung eine Auswirkung auf die Änderung Phasendifferenz zwischen der Phase am ersten und am zweiten Objekt bei der Umschaltung der Frequenzen hat. Diese ist aber bei Kenntnis des Phasensprungs rechnerisch korrigierbar.

## Patentansprüche

1. Verfahren zur Kalibrierung mindestens eines Systems zur Durchführung einer Signallaufzeitmessung und/oder Signallaufzeitdifferenzmessung, wobei das System auch eingerichtet ist, insbesondere in Zusammenwirkung mit einem ersten Objekt, eine Entfernungsmessung auf Basis einer Phasenmessung durchzuführen, wobei mindestens eine erste Entfernungsmessung zu dem ersten Objekt mittels Phasenmessung, insbesondere Phasenverschiebung und/oder Änderung einer Phasenverschiebung mit der Frequenz, und mindestens eine Signallaufzeitmessung oder eine zweite Entfernungsmessung basierend auf mindestens einer Signallaufzeitmessung zu dem oder über das erste Objekt durchgeführt werden, wobei das System zur Durchführung weiterer Signallaufzeitmessungen und/oder Entfernungsmessungen und/oder Ortung auf Basis mindestens einer Signallaufzeitmessung und/oder Signallaufzeitdifferenzmessung mittels der mindestens einen ersten Phasenmessung kalibriert wird.

2. Verfahren nach Anspruch 1, wobei das System mindestens ein zweites Objekt und insbesondere auch das erste Objekt beinhaltet und die Entfernungs- und/oder Laufzeitmessungen zwischen dem ersten und dem mindestens einen zweiten Objekt erfolgen und/oder die Durchführung weiterer Signallaufzeitmessungen und/oder Entfernungsmessungen und/oder Ortung auf Basis mindestens einer Signallaufzeitmessung und/oder Signallaufzeitdifferenzmessung zwischen dem ersten Objekt und mindestens einen zweiten Objekt mittels der mindestens einen ersten Phasenmessung kalibriert wird.

3. Verfahren nach einem der vorstehenden Ansprüche, zur Kalibrierung mindestens eines Systems zur Durchführung einer Mehrzahl von Signallaufzeitdifferenzmessungen, jeweils zwischen einem gemeinsamen ersten Objekt und einem zweiten aus einer Mehrzahl zweiter Objekte, wobei das System auch eingerichtet ist, insbesondere in Zusammenwirkung des ersten Objekts mit mindestens einem Objekt der Mehrzahl der zweiten Objekte, mindestens eine erste Entfernungsmessung, insbesondere zwischen dem ersten Objekt und mindestens einem Referenzobjekt der Mehrzahl zweiter Objekte, auf Basis einer Phasenmessung durchzuführen, wobei die mindestens eine erste Entfernungsmessung zu dem ersten Objekt mittels Phasenmessung, insbesondere Phasenverschiebung und/oder Änderung einer Phasenverschiebung mit der Frequenz, und mindestens eine, Mehrzahl von Signallaufzeitdifferenzmessungen zwischen Signallaufzeiten, jeweils zwischen dem gemeinsamen ersten und einem zweiten Objekt aus der Mehrzahl zweiter Objekte, darunter auch das Referenzobjekt, durchgeführt werden, wobei, dass das System zur Durchführung weiterer Signallaufzeitdifferenzmessungen zwischen Signallaufzeiten und/oder Entfernungsmessungen und/oder Ortungen basierend auf weiteren Signallaufzeitdifferenzmessungen zwischen Signallaufzeiten, jeweils zwischen dem gemeinsamen ersten und einem zweiten Objekt aus der Mehrzahl zweiter Objekte mittels der mindestens einen ersten Phasenmessung kalibriert wird und wobei das System insbesondere eingerichtet ist, eine Mehrzahl von Signallaufzeitdifferenzmessungen, jeweils zwischen dem gemeinsamen ersten Objekt und einem zweiten Objekt aus einer Mehrzahl zweiter Objekte durchzuführen und darauf basierend mindestens eine Entfernung und/oder Lage des ersten Objekts zu bestimmen.

4. Verwendung mindestens einer Phasenmessung an mindestens einem Signal zwischen einem ersten und mindestens einem zweiten Objekt, insbesondere mindestens einer phasenbasierten Entfernungsmessung, zur Kalibrierung mindestens einer Vorrichtung und/oder Systems zur Signallaufzeitmessung und/oder Signallaufzeitdifferenzmessungen und/oder signallaufzeitmessungbasierten und/oder signallaufzeitdifferenzmessungbasierten Entfernungsmessung und/oder Ortung des ersten und/oder mindestens einen zweiten Objekts, wobei die Vorrichtung insbesondere Teil des ersten und/oder mindestens einen zweiten Objekts ist und/oder das System das erste und/oder mindestens eine zweite Objekt beinhaltet.

5. Verwendung nach dem vorstehenden Anspruch 4, wobei die mindestens eine Vorrichtung Teil eines System zur signallaufzeitdifferenzmessungbasierten Entfernungsmessung und/oder Ortung des ersten Objekts ist und eine Mehrzahl zweiter Objekte umfasst, wobei das System insbesondere eingerichtet ist, eine Mehrzahl von Signallaufzeitdifferenzmessungen, jeweils zwischen dem gemeinsamen ersten und einem zweiten Objekt aus einer Mehrzahl zweiter Objekte durchzuführen und darauf basierend mindestens eine Entfernung und/oder Lage des ersten Objekts zu bestimmten.

6. Verwendung oder Verfahren nach einem der vorstehenden Ansprüche, wobei die Kalibrierung eine Kalibrierung der Signallaufzeitmessung und/oder signallaufzeitmessungbasierten Entfernungsmessung zwischen dem ersten und zweiten Objekt ist.

7. Verwendung oder Verfahren nach einem der vorstehenden Ansprüche, wobei die Kalibrierung zur Durchführung mindestens einer, insbesondere einer Vielzahl von, Signallaufzeitmessung(en) und/oder signallaufzeitbasierten Entfernungsmessung(en), Entfernungsmessungen und/oder Ortungen des Systems, insbesondere des ersten Objekts, insbesondere zwischen erstem und zweitem Objekt genutzt wird, insbesondere der Art, dass die Kalibrierung einen, insbesondere frequenz- und/oder temperaturabhängigen, Offset ermittelt, der bei der mindestens einen Signallaufzeitmessung und/oder signallaufzeitbasierten Entfernungsmessung als Korrektur verwendet wird.

8. Verwendung oder Verfahren nach einem der vorstehenden Ansprüche, wobei die Phasenmessung und/oder phasenbasierte Entfernungsmessung nicht vorrichtungs-/systemspezifisch und/oder lediglich baureihen- und/oder serienspezifisch kalibriert ist und/oder wird.

9. Verwendung oder Verfahren nach einem der vorstehenden Ansprüche, wobei mehrere Phasenmessungen und/oder phasenbasierte Entfernungsmessungen bei unterschiedlichen Frequenzen und/oder mehrere Messungen der Änderungen der Phasenverschiebungen mit der Frequenz bei unterschiedlichen Frequenzabständen zur Reduktion und/oder zum Ausschluss von Mehrdeutigkeiten, insbesondere im Rahmen der Ungenauigkeit der Signallaufzeitmessung und/oder signallaufzeitmessungbasierten Entfernungsmessung vor der Kalibrierung, durchgeführt und/oder für die Kalibrierung verwendet werden.

10. Verwendung oder Verfahren nach einem der vorstehenden Ansprüche, wobei eine, insbesondere frequenz- und/oder temperaturabhängige Differenz zwischen phasenbasiert ermittelter Entfernung und signallaufzeitbasierter Entfernungsmessung als, insbesondere frequenz- und/oder temperaturabhängiger, Korrekturterm ermittelt wird, mittels dessen mindestens eine weitere Signallaufzeitmessung und/oder weitere Entfernungsmessung auf Basis mindestens einer weiteren Signallaufzeitmessung des Systems, insbesondere des ersten Objekts, insbesondere zwischen erstem und zweitem Objekt, korrigiert wird.

11. Verwendung oder Verfahren nach einem der vorstehenden Ansprüche, wobei das Signal der Signallaufzeitmessung und/oder das Signal, an dem die Phasenmessung durchgeführt wird, ein Funksignal ist, insbesondere ein gemeinsames Funksignal beinhaltet und/oder wobei die Signallaufzeit die Signallaufzeit für einen Weg zwischen zweitem und erstem Objekt oder die Signalrundlaufzeit zwischen zweitem und erstem Objekt und zurück ist.

12. Verwendung oder Verfahren nach einem der vorstehenden Ansprüche, wobei der Zeitabstand zwischen dem Übertragen eines Signals für die Signallaufzeitmessung und einem Signal für die Phasenmessung geringer ist als 500 ms und/oder wobei für die Signallaufzeitmessung mindestens eine Phasenmessung am selben Signal durchgeführt wird und/oder an Signalen mit ähnlicher Frequenz durchgeführt wird.

13. Verwendung oder Verfahren, wobei die Kalibrierung nach einem der vorstehenden Ansprüche für eine Vielzahl von Vorrichtungen und/oder Paaren von baugleichen Vorrichtungen und/oder Vorrichtungen aus einer Baureihe oder Serie jeweils einzeln durchgeführt wird, wobei für die Phasenmessung und/oder phasenbasierte Entfernungsmessung für alle Vorrichtungen und/oder Paare der Vielzahl nur eine einheitliche für alle gleiche Kalibrierung verwendet wird und/oder wobei die die Kalibrierung und/oder der Korrekturterm frequenz- und/oder temperaturabhängig ist.

14. Vorrichtung aufweisend eine Sende- und Empfangsanordnung sowie eine Einheit zur Phasenmessung, einen Oszillator, einen Zeitmesser, eingerichtet zur Durchführung einer Signallaufzeitmessung, aufweisend eine Steuerung zur Durchführung des Verfahrens nach einem der vorstehenden Ansprüche mittels der Vorrichtung.

15. System umfassend mindestens zwei Objekte, wobei mindestens eines der beiden Objekte die Vorrichtung von Anspruch 14 ist jeweils aufweisend eine Sende- und/oder Empfangsanordnung, eine PLL und/oder Oszillator und insbesondere einen Zeitmesser und eingerichtet zur gemeinsamen Durchführung einer Signallaufzeitmessung zwischen den zwei Objekten und einer phasenbasierten Entfernungsmessung zwischen den zwei Objekten, aufweisend mindestens eine Steuerung zur Durchführung des Verfahrens nach einem der vorstehenden Ansprüche mittels der mindestens zwei Objekte.

## Claims

1. A method for calibrating at least one system for carrying out a signal propagation time measurement and/or a signal propagation time difference measurement, wherein the system is also configured, in particular in conjunction with a first object, to carry out a distance measurement based on a phase measurement, wherein at least one first distance measurement to the first object is carried out by means of a phase measurement, in particular phase shift and/or variation of a phase shift with frequency, and at least one signal transit time measurement or a second distance measurement based on at least one signal transit time measurement to or via the first object,
wherein the system is calibrated by means of said at least one first phase measurement for the purpose of carrying out further signal transit time measurements and/or distance measurements and/or positioning based on at least one signal transit time measurement and/or signal transit time difference measurement.

2. A method according to claim 1, wherein the system comprises at least one second object and, in particular, also the first object, and the distance and/or time-of-flight measurements are carried out between the first and said at least one second object, and/or the performance of further signal time-of-flight measurements and/or distance measurements and/or positioning based on at least one signal time-of-flight measurement and/or signal time-of-flight difference measurement between the first object and at least one second object is calibrated by means of said at least one first phase measurement.

3. A method according to any one of the preceding claims, for calibrating at least one system for carrying out a plurality of signal transit time difference measurements, in each case between a common first object and a second object from a plurality of second objects, wherein the system is also configured, in particular in cooperation between the first object and at least one object from the plurality of second objects, to carry out at least one first distance measurement, in particular between the first object and at least one reference object from the plurality of second objects, on the basis of a phase measurement, wherein said at least one first distance measurement to the first object is carried out by means of phase measurement, in particular phase shift and/or a change in phase shift with frequency, and at least one of the plurality of signal transit time difference measurements is carried out between signal transit times, in each case between the common first object and a second object from the plurality of second objects, including the reference object, whereby the system is configured to carry out further signal transit time difference measurements between signal transit times and/or distance measurements and/or localisations based on further signal transit time difference measurements between signal transit times, in each case between the common first object and a second object from the plurality of second objects, by means of said at least one first phase measurement, and wherein the system is in particular configured to carry out a plurality of signal transit time difference measurements, in each case between the common first object and a second object from a plurality of second objects, and, on that basis, to determine at least one distance and/or position of the first object.

4. The use of at least one phase measurement on at least one signal between a first and at least one second object, in particular at least one phase-based distance measurement, for the calibration of at least one device and/or system for signal transit time measurement and/or signal transit time difference measurements and/or signal transit time measurement-based and/or signal transit time difference measurement-based distance measurement and/or localisation of the first and/or at least one second object, wherein the device is, in particular, part of the first and/or at least one second object and/or the system comprises the first and/or at least one second object.

5. The use according to claim 4 above, wherein said at least one device forms part of a system for signal transit time difference-based distance measurement and/or localisation of the first object and comprises a plurality of second objects, wherein the system is in particular configured to perform a plurality of signal transit time difference measurements, each between the common first object and a second object from a plurality of second objects, and to determine, on that basis, at least one distance and/or position of the first object.

6. The use or method according to any of the preceding claims, wherein the calibration is a calibration of the signal transit time measurement and/or signal transit time-based distance measurement between the first and second objects.

7. The use or method according to any of the preceding claims, wherein the calibration is used to carry out at least one, in particular a plurality of, signal transit time measurements and/or signal transit time-based distance measurements, distance measurements and/or localisations of the system, in particular of the first object, in particular between the first and second objects, in particular of such a nature that the calibration determines an offset-in particular one that is frequency- and/or temperature-dependent-which is used as a correction in said at least one signal transit time measurement and/or signal transit time-based distance measurement.

8. The use or method according to any of the preceding claims, wherein the phase measurement and/or phase-based distance measurement is not device- or system-specific and/or is calibrated solely on a model and/or series-specific basis.

9. The use or method according to any of the preceding claims, wherein multiple phase measurements and/or phase-based distance measurements at different frequencies and/or multiple measurements of the changes in phase shifts with frequency at different frequency intervals are carried out to reduce and/or eliminate ambiguities, in particular in the context of the inaccuracy of the signal transit time measurement and/or signal transit time-based distance measurement prior to calibration, and/or are used for the calibration.

10. The use or method according to any one of the preceding claims, wherein a difference-in particular one that is frequency- and/or temperature-dependent-between a phase-based distance measurement and a signal-propagation-time-based distance measurement is used as a correction term-in particular one that is frequency- and/or temperature-dependent- correction term, by means of which at least one further signal transit time measurement and/or further distance measurement is corrected on the basis of at least one further signal transit time measurement of the system, in particular of the first object, in particular between the first and second objects.

11. The use or method according to any of the preceding claims, wherein the signal of the signal transit time measurement and/or the signal on which the phase measurement is performed is a radio signal, in particular a shared radio signal, and/or wherein the signal transit time is the signal transit time for a path between the second and first objects or the signal round-trip time between the second and first objects and back.

12. The use or method according to any of the preceding claims, wherein the time interval between the transmission of a signal for the signal propagation time measurement and a signal for the phase measurement is less than 500 ms and/or wherein, for the signal propagation time measurement, at least one phase measurement is carried out on the same signal and/or on signals of a similar frequency.

13. The use or method, wherein the calibration according to one of the preceding claims is carried out individually for a plurality of devices and/or pairs of identical devices and/or devices from a series or range, wherein, for the phase measurement and/or phase-based distance measurement for all devices and/or pairs within the plurality, only a single, uniform calibration-identical for all-is used, and/or wherein the calibration and/or the correction term is frequency- and/or temperature-dependent.

14. A device comprising a transmitting and receiving arrangement and a unit for phase measurement, an oscillator, and a timer, configured to carry out a signal propagation time measurement, comprising a controller for carrying out the method according to one of the preceding claims by means of the device.

15. A system comprising at least two objects, wherein at least one of the two objects is the device of claim 14, each comprising a transmitting and/or receiving arrangement, a PLL and/or oscillator and, in particular, a timer, and configured to jointly carry out a signal transit time measurement between the two objects and a phase-based distance measurement between the two objects, comprising at least one controller for carrying out the method according to one of the preceding claims by means of said at least two objects.

## Revendications

1. Procédé d'étalonnage d'au moins un système destiné à effectuer une mesure du temps de propagation d'un signal et/ou une mesure de la différence de temps de propagation d'un signal, le système étant également agencé pour effectuer, notamment en coopération avec un premier objet, une mesure de distance sur la base d'une mesure de phase, au moins une première mesure de distance par rapport au premier objet étant effectuée au moyen d'une mesure de phase, notamment le déphasage et/ou la variation d'un déphasage en fonction de la fréquence, et au moins une mesure du temps de propagation du signal ou une seconde mesure de distance fondée sur au moins une mesure du temps de propagation du signal vers ou via le premier objet,
le système étant calibré au moyen de ladite au moins une première mesure de phase pour effectuer d'autres mesures de temps de transit et/ou mesures de distance et/ou localisations fondées sur au moins une mesure de temps de transit et/ou une mesure de différence de temps de transit.

2. Procédé selon la revendication 1, dans lequel le système comprend au moins un second objet et, en particulier, également le premier objet, et les mesures de distance et/ou de temps de propagation entre le premier objet et ledit au moins second objet, et/ou la réalisation d'autres mesures de temps de propagation et/ou de distance et/ou de localisation sur la base d'au moins une mesure de temps de propagation et/ou d'une mesure de différence de temps de propagation entre le premier objet et au moins un second objet est calibrée au moyen de ladite au moins une première mesure de phase.

3. Procédé selon l'une des revendications précédentes, destiné à l'étalonnage d'au moins un système permettant d'effectuer une pluralité de mesures de différence de temps de propagation du signal, respectivement entre un premier objet commun et un second objet parmi une pluralité de seconds objets, le système étant également agencé, notamment en coopération du premier objet avec au moins un objet parmi la pluralité de seconds objets, pour effectuer au moins une première mesure de distance, notamment entre le premier objet et au moins un objet de référence parmi la pluralité de seconds objets, sur la base d'une mesure de phase, ladite au moins une première mesure de distance vers le premier objet étant effectuée au moyen d'une mesure de phase, notamment d'un déphasage et/ou d'une variation d'un déphasage en fonction de la fréquence, et au moins une, parmi la pluralité de mesures de différence de temps de propagation, respectivement entre le premier objet commun et un second objet parmi la pluralité de seconds objets, y compris l'objet de référence, le système étant calibré pour effectuer d'autres mesures de différence de temps de propagation entre les temps de propagation et/ou des mesures de distance et/ou des localisations fondées sur d'autres mesures de différence de temps de propagation entre les temps de propagation, respectivement entre le premier objet commun et un second objet parmi la pluralité de seconds objets, au moyen de ladite au moins une première mesure de phase, et dans lequel le système est notamment conçu pour effectuer une pluralité de mesures de différence de temps de propagation, respectivement entre le premier objet commun et un second objet parmi une pluralité de seconds objets, et pour déterminer, sur cette base, au moins une distance et/ou une position du premier objet.

4. Utilisation d'au moins une mesure de phase sur au moins un signal entre un premier et au moins un second objet, en particulier d'au moins une mesure de distance fondée sur la phase, pour l'étalonnage d'au moins un dispositif et/ou système de mesure du temps de propagation du signal et/ou de mesures de la différence de temps de propagation du signal et/ou de mesures de distance fondées sur la mesure du temps de propagation du signal et/ou de mesures de localisation fondées sur la mesure de la différence de temps de propagation du signal du premier objet et/ou d'au moins un second objet, le dispositif faisant notamment partie du premier objet et/ou d'au moins un second objet et/ou le système comprenant le premier objet et/ou au moins un second objet.

5. Utilisation selon la revendication 4 ci-dessus, dans laquelle ledit au moins un dispositif fait partie d'un système destiné à la mesure de distance et/ou à la localisation du premier objet sur la base de la mesure de la différence de temps de propagation du signal et comprend une pluralité de seconds objets, le système étant notamment agencé pour effectuer une pluralité de mesures de différence de temps de propagation du signal, respectivement entre le premier objet commun et un second objet parmi une pluralité de seconds objets, et de déterminer, sur cette base, au moins une distance et/ou une position du premier objet.

6. Utilisation ou procédé selon l'une des revendications précédentes, l'étalonnage étant un étalonnage de la mesure du temps de propagation du signal et/ou de la mesure de distance fondée sur la mesure du temps de propagation du signal entre le premier et le second objet.

7. Utilisation ou procédé selon l'une des revendications précédentes, dans lequel l'étalonnage sert à effectuer au moins une, en particulier une pluralité de, mesures de temps de propagation du signal et/ou de mesures de distance fondées sur le temps de propagation du signal, des mesures de distance et/ou des localisations du système, en particulier du premier objet, notamment entre le premier et le second objet, notamment de telle sorte que l'étalonnage détermine un décalage, notamment dépendant de la fréquence et/ou de la température, qui est utilisé comme correction lors de ladite au moins une mesure du temps de propagation du signal et/ou de la mesure de distance fondée sur le temps de propagation du signal.

8. Utilisation ou procédé selon l'une des revendications précédentes, dans lequel la mesure de phase et/ou la mesure de distance fondée sur la phase n'est pas et/ou n'est pas calibrée spécifiquement pour un dispositif ou un système et/ou l'est uniquement spécifiquement pour une série et/ou un modèle.

9. Utilisation ou procédé selon l'une des revendications précédentes, dans lequel plusieurs mesures de phase et/ou mesures de distance fondées sur la phase sont effectuées à différentes fréquences et/ou plusieurs mesures des variations des déphasages en fonction de la fréquence sont effectuées à différents intervalles de fréquence afin de réduire et/ou d'exclure les ambiguïtés, notamment dans le cadre de l'imprécision de la mesure du temps de propagation du signal et/ou de la mesure de distance fondée sur celle-ci avant l'étalonnage, et/ou sont utilisées pour l'étalonnage.

10. Utilisation ou procédé selon l'une des revendications précédentes, dans lequel une différence, notamment dépendante de la fréquence et/ou de la température, entre la distance déterminée par la méthode de mesure de phase et la mesure de distance fondée sur le temps de propagation du signal est utilisée comme terme de correction, notamment en fonction de la fréquence et/ou de la température, terme de correction, au moyen duquel au moins une autre mesure du temps de propagation du signal et/ou une autre mesure de distance est corrigée sur la base d'au moins une autre mesure du temps de propagation du signal du système, notamment du premier objet, en particulier entre le premier et le second objet.

11. Utilisation ou procédé selon l'une des revendications précédentes, dans lequel le signal de la mesure du temps de propagation et/ou le signal sur lequel est effectuée la mesure de phase est un signal radio, comprenant notamment un signal radio commun, et/ou dans lequel le temps de propagation est le temps de propagation pour un trajet entre le second objet et le premier objet ou le temps de propagation aller-retour entre le second et le premier objet.

12. Utilisation ou procédé selon l'une des revendications précédentes, dans lequel l'intervalle de temps entre l'émission d'un signal destiné à la mesure du temps de propagation et d'un signal destiné à la mesure de phase est inférieur à 500 ms et/ou dans lequel, pour la mesure du temps de propagation, au moins une mesure de phase est effectuée sur le même signal et/ou sur des signaux de fréquence similaire.

13. Utilisation ou procédé, dans lequel l'étalonnage selon l'une des revendications précédentes est effectué individuellement pour une pluralité de dispositifs et/ou de paires de dispositifs de construction identique et/ou de dispositifs appartenant à une gamme ou à une série, dans lequel, pour la mesure de phase et/ou la mesure de distance fondée sur la phase, un seul étalonnage uniforme, identique pour tous, est utilisé pour l'ensemble des dispositifs et/ou paires de la pluralité, et/ou dans lequel l'étalonnage et/ou le terme de correction dépendent de la fréquence et/ou de la température.

14. Dispositif comprenant un agencement d'émission et de réception ainsi qu'une unité de mesure de phase, un oscillateur, un chronomètre, agencé pour effectuer une mesure du temps de propagation d'un signal, comprenant une unité de commande pour mettre en œuvre le procédé selon l'une des revendications précédentes à l'aide du dispositif.

15. Système comprenant au moins deux objets, dont au moins l'un est le dispositif selon la revendication 14, chacun comportant un dispositif d'émission et/ou de réception, une boucle à verrouillage de phase (PLL) et/ou un oscillateur, et notamment un chronomètre, et agencés pour effectuer conjointement une mesure du temps de propagation d'un signal entre les deux objets et une mesure de distance fondée sur la phase entre les deux objets, comprenant au moins une unité de commande pour mettre en œuvre le procédé selon l'une des revendications précédentes à l'aide desdits au moins deux objets.
